## Europäisches Patentamt

## European Patent Office

## Office européen des brevets

(11) Veröffentlichungsnummer: **0 163 843**
**A2**

(12) # EUROPÄISCHE PATENTANMELDUNG

(21) Anmeldenummer: 85104047.7

(51) Int. Cl.⁴: **B 24 D 5/12**

(22) Anmeldetag: 03.04.85

(30) Priorität: 21.05.84 DE 3418815
14.09.84 DE 3433729

(43) Veröffentlichungstag der Anmeldung: 11.12.85
Patentblatt 85/50

(84) Benannte Vertragsstaaten: **BE DE FR GB IT NL SE**

(71) Anmelder: **Ernst Winter & Sohn (GmbH & Co.),
Osterstrasse 58, D-2000 Hamburg 19 (DE)**

(72) Erfinder: **Dietrich, Rainer, Dr. Dipl.-Ing.,
Cordt-Buck-Weg 44 a, D-2000 Norderstedt (DE)**
Erfinder: **Sasse, Karl-Michael, Dipl.-Ing., Norderkamp 28,
D-2359 Henstedt-Ulzburg (DE)**
Erfinder: **Hilsch, Georg, Dipl.-Ing., Saarstrasse 1,
D-3013 Barsinghausen (DE)**

(74) Vertreter: **Minetti, Ralf, Dipl.-Ing., Ballindamm 15,
D-2000 Hamburg 1 (DE)**

(54) **Werkzeug mit Verschleissschutzschicht.**

(57) Werkzeuge (10), die bei der Bearbeitung insbesondere von Gestein eingesetzt werden, unterliegen neben dem Verschleiß durch den eigentlichen Bearbeitungsvorgang des Gesteins an ihren aktiven Bearbeitungskanten und -flächen ebenfalls einem Verschleiß an den passiven Werkzeugflanken (15) und -seiten, die nicht in unmittelbarem Kontakt mit dem Gestein sind, sondern nur von Kühlschmiermitteln angeströmt werden. Dieser auf Erosions-, Kavitations- und Korrosionseinflüssen beruhende Verschleiß der passiven Werkzeugflanken (15), der die Standzeiten kostspieliger Bearbeitungswerkzeuge erheblich vermindert, soll behoben werden. Es wird dafür vorgeschlagen, die den Werkzeuggrundkörper (11) eines derartigen Werkzeugs (10) wenigstens teilweise umgebende Verschleißschutzschicht (12) aus einem weichen Werkstoff auszubilden, so daß die den Abtrag bzw. den Verschleiß verursachenden Prozesse durch Energieabsorbtion oder Partikelreflektion in ihrer nachteiligen Wirkung aufgehoben werden.

DIPL.-ING **RALF MINETTI**

P A T E N T A N W A L T

Anm.: Firma Ernst Winter & Sohn
(GmbH & Co.), Hamburg

meine Akte: EPA 1019/85

2 HAMBURG 1, den 29. März 1985.

Ballindamm 15 10/44

Fernsprecher 33 **0163843**

Bank: Commerzbank AG, Konto-Nr. 38/57 554
(BLZ 200 400 00)

Postscheck: Hamburg 2509 00-207
(BLZ 200 100 20)

Anm.: Firma Ernst Winter & Sohn
(GmbH & Co.), Hamburg

Werkzeug mit Verschleißschutzschicht zur

Bearbeitung insbesondere von Gestein

Die Erfindung betrifft ein Werkzeug zur
Bearbeitung insbesondere von Gestein mit
einem Werkzeuggrundkörper, der ein oder
mehrere Bearbeitungselemente trägt, die
mit einer Verschleißschutzschicht versehen
sind.

Werkzeuge zur Bearbeitung, insbesondere
nichtmetallischer Werkstoffe wie Gestein,
beispielsweise Bohrer, Trennscheiben und
Sägen, weisen in der Regel einen Werkzeuggrundkörper auf, der ein oder mehrere
Bearbeitungselemente trägt, die aus Hartmetall oder einer Metallegierung oder Verbundwerkstoffen bestehen und im allgemeinen
eine hohe Verschleißfestigkeit gegen Reibverschleiß zeigen. Derartige Grundkörper
dienen auch als Matrix für Diamanten oder
Körnungen aus kubisch kristallinem Bornitrid.

- 2 -

In der Regel besteht die Bindung beispielsweise von Schleifkörnern aus Diamant aus einem härteren Material, wie beispielsweise einer Eisenlegierung oder einer Hartmetallegierung wie Wolframkarbid oder einer Kobaltlegierung.

Eine Reihe dieser matrixbildenden Werkstoffe, die in der Reibpaarung Stein/Matrix sehr gute Verschleißeigenschaften zeigen, sind gegen Erosions-, Kavitations- und Korrosionsverschleiß sowie gegen Kombinationen dieser Verschleißerscheinungen, beispielsweise dem sogenannten Fretting, sehr empfindlich. Derartige Verschleißerscheinungen führen im wesentlichen durch Verschleiß der Werkzeugflanken und der Stirnseiten zu einem vorzeitigen Werkzeugausfall, obwohl die aktiven Bearbeitungsflächen des Werkzeuges noch keineswegs verbraucht sind. Ein derartiger Verschleiß tritt insbesondere dann auf, wenn aufgrund der Werkzeuggeometrie die Werkzeugflanken sich nicht in Kontakt mit dem Werkstück befinden, sondern lediglich von Kühlschmiermitteln angeströmt werden.

Wird das Kühlmittel in einem Kreislauf geführt, tritt diese Art von Verschleiß durch den im Schmiermittel in Suspension gehaltenen Werkstückschlamm, das heißt Steinschlamm, verstärkt auf. Kühlmittelzusätze, die zu einer erheblichen Standzeiterhöhung der aktiven Reibfläche beitragen, führen zu einer weiteren Erhöhung des Flanken- und Stirnverschleißes, wenn sie die Absetzzeiten des Schlammes, zum Beispiel durch die im Mittel enthaltenen Emulgatoren erhöhen, so daß eine erhöhte Partikelkonzentration im Kühlmittel vorliegt.

Zur Vermeidung derartiger Verschleißvorgänge sind bisher Verschleißschutzschichten in Form einer Panzerung bekannt geworden, deren wesentliche Eigenschaft darin besteht, daß sie von beträchtlicher Härte sind. Diese bekannten harten Panzerungen sind durch Auftragsschweißung oder durch Aufspritzen einer Schicht auf die arbeitspassiven Flächen des Werkzeugs aufgebracht und sind als galvanische Hartstoffdispersionsschichten bekannt.

Der Nachteil dieser bekannten Panzerungen besteht darin, daß diese aufgrund ihrer harten Eigenschaften die Auftreffenergie der Abtragspartikel nicht aufzunehmen vermögen und damit der erosions-, kavitations- und korrosionsbedingte Verschleiß gegenüber Werkzeugen ohne Verschleißschutzschicht zeitlich nur unbeträchtlich verzögert wird.

Es ist Aufgabe der vorliegenden Erfindung, eine Verschleißschutzschicht für Werkzeuge vorzusehen, die das Werkzeug zur Erhöhung seiner Standzeit gegen einen Erosions-, Kavitations- und Korrosionsverschleiß wirksam schützt.

Gelöst wird diese Aufgabe gemäß der Erfindung dadurch, daß die Verschleißschutzschicht aus einem weicheren Werkstoff als der Verbundwerkstoff der Bearbeitungselemente besteht, zum Zwecke der Reflektion oder der Absorbtion der Abtragsenergie. Gegenüber einer Panzerung aus harten Werkstoffen besteht der Vorteil der Anordnung einer Verschleißschutzschicht gemäß der Erfindung, das heißt aus einem weichen Werkstoff darin, daß die Energie der den Abtrag verursachenden Partikel von dieser Verschleißschutzschicht zerstörungsarm aufgenommen und damit wirkungslos gemacht wird. Nach der Erfindung kann das durch elastische Reflektion der Partikel geschehen, wenn eine Verschleißschutzschicht vorgesehen ist, die elastische Eigenschaften besitzt.

Nach einer anderen Ausführungsform kann die den Abtrag verursachende Energie für das Werkzeug dadurch unschädlich gemacht werden, daß die Verschleißschutzschicht plastische Eigenschaften besitzt, die zu einer Absorbtion der Abtragsenergie führen.

Eine elastische Reflektion tritt vorzugsweise bei Verwendung einer Verschleißschutzschicht ein, die aus Kautschuk oder Silikonkautschuk besteht. Grundsätzlich eignen sich deshalb allgemein gummi- oder viscoelastische Werkstoffe.

Je nach der Art der Verwendung des Werkzeugs und des Schmier- bzw. Kühlmittels
kann es nötig sein, andere Werkstoffe
als Kautschuk oder Silikonkautschuk zur
Ausbildung der Verschleißschutzschicht
im Sinne der Erfindung vorzusehen. Diese
kann deshalb auch aus einem Kunststoff
bestehen, beispielsweise aus Polyurethan
oder einem Epoxidharz.

Daneben sind Verschleißschutzschichten
aus einem Metall besonders geeignet, das
eine niedrige Härte und eine geringe Rekristallisationstemperatur aufweist, wobei
es sich auch um eine Metallegierung handeln
kann. Unter einer solchen Rekristallisationstemperatur ist allgemein die Schmelztemperatur zu verstehen. Liegt also der Bereich
der Sintertemperatur des Bindungswerkstoffes für die Diamanten in den Bearbeitungselementen bei etwa 650 - 1.400°C.
so sollte die Rekristallisationstemperatur
der Verschleißschutzschicht niedriger
sein.

Da die den schädlichen Abtrag am Werkzeug
verursachenden Energien von beträchtlicher Größe sind, ist eine starke Haftung der Verschleißschutzschicht am Werkzeug von großer Bedeutung. Es sind deshalb Verschleißschutzschichten besonders geeignet, die auf dem Werkzeuggrundkörper galvanisch aufgebracht werden können, wie beispielsweise duktile Metalle, insbesondere Kupfer, die eine gute Hafteigenschaft auf dem Werkzeuggrundkörper zeigen. Ebenfalls ist es möglich, derartige Verschleißschutzschichten als Lot auf dem Werkzeugkörper aufzubringen, insbesondere durch Weichlöten.

Grundsätzlich ist die Ausbildung der hier vorgeschlagenen Verschleißschutzschicht bei allen Werkzeugen möglich, die zur Bearbeitung von metallischen wie auch nichtmetallischen Werkstoffen, insbesondere von Gestein eingesetzt werden. Dazu zählen auch Werkzeuge, die diamantbestückte Bearbeitungselemente aufweisen oder Bearbeitungselemente mit kristallinem Bornitrid. Auch bei diesen wird also das Ziel erreicht, die Standzeiten vom tatsächlichen Verschleiß seiner aktiven Bearbeitungsflächen abhängig zu machen.

Die erfindungsgemäße Anordnung einer Verschleißschutzschicht aus einem weicheren
Werkstoff als dem Verbundwerkstoff der
Bearbeitungselemente schließt nicht aus,
daß die Verschleißschutzschicht zusätzlich
eine Körnung aus einem Hartstoff aufweist,
insbesondere auch aus Diamant oder Bornitrid. Dadurch kann eine mitschneidende
Wirkung der Schutzschicht ausgenutzt werden. Es handelt sich hierbei also nicht
um eine Panzerung der Bearbeitungselemente.
Die zusätzliche Hartstoffbestückung der
an sich weichen Verschleißschicht trägt
allein dem Abtrag der Werkstücke im Bereich
der Aktiven Bearbeitungsfläche bei.

Die Erfindung ist nachstehend unter Bezugnahme auf eine Zeichnung erläutert. Darin
zeigen:

Figur 1:    Teilausschnitte von Werkzeugen
            mit unterschiedlich ausgebildeten
            Bearbeitungselementen im Querschnitt
            und

Figur 2:    ein Schnitt nach der Linie II-II

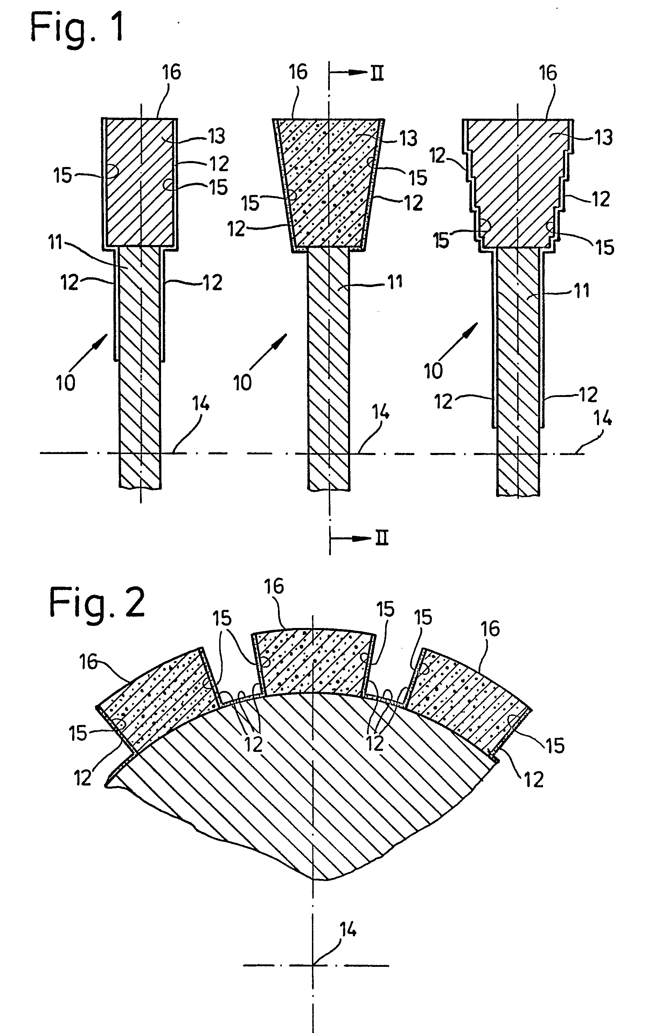

            der Figur 1 mit Bearbeitungselementen und einer Verschleißschutzschicht, die eine Diamantkörnung enthalten.

Bei dem in der Figur 1 und 2 dargestellten
Werkzeug handelt es sich um ein Sägeblatt,
das um eine Achse 14 drehbar gelagert
ist. Das Werkzeug 10 trägt auf einem scheibenförmigen Werkzeuggrundkörper 11 mehrere,
im Abstand zueinander stehende segmentartige Bearbeitungselemente 13, die entsprechend der Figur 1 von verschiedenartigem
Querschnitt sein können.

Die Bearbeitungselemente 13 sind an ihren
am eigentlichen Bearbeitungsvorgang nicht
beteiligten passiven Seiten 15, das heißt
ihren beiden Außenseiten sowie ihrer Vorder- und Rückseite mit einer aus einem
relativ weichen Werkstoff bestehenden
Verschleißschutzschicht 12 ummantelt,
während die aktive außenliegende Seite
16 eines Bearbeitungselementes 13 frei
ist von einer Verschleißschutzschicht
bzw. während der Benutzung des Werkzeuges
frei wird, da das Werkzeug 10 herstellungsbedingt vollständig mit einer Schutzschicht
ummantelt sein kann bzw. auch der tragende Werkzeuggrundkörper 11 entsprechend den
Darstellungen in Figur 1 mit der Schutzschicht versehen sein kann.

Je nach der Geometrie der Bearbeitungselemente 13 oder des gesamten Werkzeuges
10 können also sämtliche am Bearbeitungsvorgang nicht teilnehmenden Flächen oder
Kanten teilweise oder vollständig mit
der aus einem weichen Werkstoff bestehenden
Verschleißschutzschicht umgeben sein,
so daß Erosions-, Kavitations- und Korrosionsverschleiß sowie Kombinationen dieser
Verschleißerscheinungen an allen Stellen
des Werkzeugs 10 vermieden werden, die
einer Gefährdung ausgesetzt sind. Aus
diesem Grunde ist die erfindungsgemäße
Verschleißschutzschicht 12 auch geeignet,
Abtragserscheinungen an beliebigen Werkzeughaltern, beispielsweise Bohrkronen,
Bohrgestängen, Sägestammblättern und dergleichen zu verhindern, die sowohl mit
diamanthaltigen Bearbeitungselementen
als auch mit nicht diamanthaltigen Bearbeitungselementen 13 bestückt sein können.

*11*

Bei der in der Zeichnung wiedergegebenen
Ausführungsform nach Figur 2 handelt es
sich um diamantkornhaltige Bearbeitungselemente 13 sowie um eine Schutzschicht,
die ebenfalls mit Diamantkorn durchsetzt
ist. Die übrigen Ausführungen der Figur
1 zeigen hingegen Schutzschichten ohne
Hartstoffkörnung.

Die Art der Aufbringung der Verschleißschutzschicht 12 ist abhängig von ihrem
Werkstoff.

Der Zeitpunkt des Aufbringens der Verschleißschutzschicht 12 hängt im wesentlichen vom gewählten Beschichtungs-Verfahren
ab. Besonders geeignet sind galvanische
Schichten und Lötschichten, da sie sowohl
auf losen Werkzeugsegmenten bzw. Bearbeitungselementen aufgebracht werden können,
die dann in der Regel auf die Werkzeughalter hart aufgelötet werden, als auch auf
fertig hartgelöteten oder geschweißten
Werkzeug/Halter-Einheiten.

Darüber hinaus lassen sich die erfindungsgemäßen Verschleißschutzschichten bei

0163843

bei Bedarf mehrmals und gegebenenfalls vor Ort auftragen, wenn ein entsprechender Verschleiß dies erforderlich machen sollte. Sowohl das Tampongalvanisieren als auch die Verwendung von Lötpasten sind grundsätzlich zur Ausbildung der erfindungsgemäßen Verschleißschutzschicht 12 geeignet. Zum Aufbringen einer dünnen Verschleißschutzschicht 12 eignet sich auch das Tauchen in bzw. das Aufpinseln von $CuSO_4$- oder $AgNO_3$- Lösungen.

DIPL.-ING **RALF MINETTI**

P A T E N T A N W A L T

2 HAMBURG 1, den 29. März 1985
Baiindanm 15
Fernsprecher 35 61 55

**0163843** 10/44

Bank: Commerzbank AG, Konto-Nr. 38/57 554
(BLZ 200 400 00)

Postscheck: Hamburg 2509 00-207
(BLZ 200 100 20)

Anm.: Firma Ernst Winter & Sohn
(GmbH & Co.), Hamburg

meine Akte: EPA 1019/85

## Patentansprüche

1. Werkzeug zur Bearbeitung insbesondere von Gestein mit einem Werkzeuggrundkörper, der ein oder mehrere Bearbeitungselemente trägt, die mit einer Verschleißschutzschicht versehen sind, dadurch gekennzeichnet, daß die Verschleißschutzschicht (12) aus einem weicheren Werkstoff besteht als der Verbundwerkstoff der Bearbeitungselemente (13).

2. Werkzeug nach Anspruch 1, dadurch gekennzeichnet, daß die Verschleißschutzschicht (12) mit einer Hartstoffkörnung aus Diamant oder Bornitrid versehen ist.

3. Werkzeug nach Anspruch 1, dadurch gekennzeichnet, daß die Verschleißschutzschicht (12) aus einem weichen, zähen Hartstoff-Metall-Verbundwerkstoff besteht.

4. Werkzeug nach Anspruch 1, dadurch gekennzeichnet, daß die Verschleißschutzschicht (12) aus einem Metall oder einer Metallegierung von niedriger Härte und niedriger Rekristallisationstemperatur besteht.

5. Werkzeug nach Anspruch 1, dadurch gekennzeichnet, daß die Verschleißschutzschicht (12) aus einem gummielastischen Werkstoff besteht.

6. Werkzeug nach Anspruch 1, dadurch gekennzeichnet, daß die Verschleißschutzschicht (12) aus Kunststoff besteht.

7. Werkzeug nach Anspruch 1, dadurch gekennzeichnet, daß die Verschleißschutzschicht (12) durch sintern, als Lot oder galvanisch auf den Bearbeitungselementen (13) aufgetragen ist.

Fig. 1

Fig. 2